# EUROPEAN PATENT SPECIFICATION

(11) **EP 1 565 068 B1**
(45) Date of publication and mention of the grant of the patent: **03.01.2007**
(21) Application number: 03770799.9
(22) Date of filing: 18.11.2003
(51) Int. Cl.: A23K 1/10, A23J 3/26, A23L 1/31

(54) **MEAT ANALOGUE OF AUTHENTIC APPEARANCE**
ECHTAUSSEHENDER FLEISCHERSATZ
ANALOGUE DE VIANDE D'APPARENCE AUTHENTIQUE

(30) Priority: 18.11.2002 AU 2002952721
(43) Date of publication of application: 24.08.2005
(73) Proprietor: Mars Incorporated, McLean, Virginia 22101-3883 (US)
(72) Inventor: GIFFARD, Catriona, Wodonga, Victoria 3690 (AU)
(74) Representative: Cornish, Kristina Victoria Joy
(86) International application number: PCT/AU2003/001541
(87) International publication number: WO 2004/045301

(56) References cited:
- EP-A- 1 250 851
- WO-A1-00/69276
- WO-A1-03/013267
- US-A- 4 006 266

## Description

The invention relates to the field of commercial pet food manufacture. In particular it relates to a protein based material that may be used to represent an authentic meat-like chunk in packaged pet food of the type filled in cans, trays and the like rigid and semi-rigid containers, and a method of manufacturing same.

### BACKGROUND OF THE INVENTION

Food manufacturers, including commercial canned pet food manufacturers, are continuously challenged to find ways to present an appetizing and authentic food product at minimised raw material costs. One area of particular endeavour has been the goal of producing attractive meat-based products from low-grade meat by-products.

The most basic attempts to produce a meat-like 'chunk', or 'meat analogue' have involved the fine grinding of meat by-products such as liver, lungs and other trims obtained from commercial slaughter operations, with cereals and other binders, followed by heat setting. The heat-set material may then be cut into desired shapes, such as cubes, and mixed into the canned food product. Such techniques are very well known in the pet food manufacturing art, and continue to be successfully used for many high volume-selling canned pet foods.

However, for some pet food products, in particular the premium and 'super-premium' products, such analogues do not provide a suitable product aesthetic. These basic analogues in particular do not have the appealing 'fibrous' internal texture that is associated with premium muscle meat. The target for premium products is to provide an aesthetic that is as close as possible to a piece of lean steak placed in the can or tray. The traditional analogue does not provide this aesthetic.

Also, where these analogues are to be included in a canned 'chunks in sauce' style product, the can sterilisation process tends to cause the analogues to become further cooked, which results in the egress of cloudy protein material into the sauce, known as 'cook-out'. This can adversely affect the colour and clarity of the sauce, which presents a major aesthetic disadvantage where a relatively clear sauce is desired.

One approach that has been taken to providing a suitable analogue for premium canned pet foods is to use cereal-based extruded chunks. Such materials tend to have the desired fibrous internal texture, due to the nature of the extrusion process, and tend to be less likely to produce cook out. However, cereal-based analogues often do not have the desired innate palatability that is required of premium-branded products.

A superior meat analogue is described in WIPO Patent Document No. WO 00/69276, by Effem Foods Pty Ltd. That document discloses an extruded meat analogue of high protein content that has excellent meat-like internal texture and suitable palatability for inclusion in premium pet foods. In particular, this kind of analogue does not produce the cloudy 'cook-out' observed in the traditional analogues.

However, due to its high strength ex-extruder, there may be difficulties in cutting or dicing this material in a sufficiently controlled manner for it to resemble, for example, a carefully prepared diced or sliced piece of steak; if this appearance is desired. The shredded product produced by the process described in WO 00/69276 tends to display a range of sizes and shapes that would make it unsuitable for this purpose.

In addition, the outer (non-shredded) surfaces of such extruded proteinaceous products can tend to be quite smooth, which is not the typical surface expected of a piece of diced muscle meat. Therefore, this lack of authenticity also detracts from the suitability of this type of analogue for use in premium 'chunks in sauce' pet foods.

### SUMMARY OF THE INVENTION

It is an object of the present invention to provide a meat analogue material that is suitable for inclusion in premium pet foods sold in cans, trays and the like containers, where a diced or sliced muscle meat aesthetic is desired.

According to one aspect of the invention, there is provided a proteinaceous meat analogue for incorporation into packaged pet foods that consists of particles of texturised, proteinaceous extrudate material dispersed in a matrix composed of ground meat-based and cereal-based materials. The inclusion of the extrudate material tends to ensure both that the cut surface of the analogue displays a 'fibrous' meat-like texture, due to the internal texture of the extrudate itself, and that the outer surface of the analogue displays an authentic 'uneven' texture, due to differential hydration of the extrudate compared with the surrounding matrix during thermal processing. An important aspect of the invention resides in employing the effect of differential hydration of the dispersed extrudate to cause the surface of the analogue to undulate, while obtaining the benefit of the fibrous internal texture of the extrudate in enhancing the fibrous 'meat-like' cut surface of the analogue.

Preferably, the extrudate is included in the meat and cereal matrix at between 20% and 80% by mass. Good results have been observed at inclusion rates of between 35% and 45% by mass, although further fine tuning may allow lower inclusion rates of the process for commercial scale operation.

The extrudate pieces may be included at any desired size that still provides a discernable fibrous texture to the cut surface of the analogue. Best results have been observed with extrudate pieces of average cross sectional diameter in the range 5mm - 80mm for chunks that are to be used in super-premium pet food analogues. Suitable extrudate sizes may readily be selected for other desired analogue sizes and shapes.

Advantageously, the extrudate is a high-moisture extruded material including about 40 to 95% by weight edible proteinaceous materials selected from the group consisting of meat of bovine, ovine or other extraction, predetermined mixtures of defatted soy flour, soy meal, soy concentrate, cereal gluten in vital or starch-containing form and egg white; and up to about 7% by weight of edible mineral binding and cross-linking compounds. Especially advantageously, the extrudate should conform to the composition and manufacture described in WO 00/69276. This type of extrudate material has been found to provide an excellent internal texture to the analogue, is palatable and tends not to cause 'cook-out' cloudiness in the canned product sauce.

A preferred composition (by mass) of the analogue is: 35 - 60% high-moisture extruded material, as described above; 5-15% ground or diced muscle meat derived from animals of the group comprising ovines, bovines and porcines; 8 - 50% ground meat derived from poultry; 8 - 25% ground liver or pluck (which may contain liver, heart and lungs) derived from animals of the group comprising ovines, bovines and porcines; 2-10% binding materials; 1-7% cereal; 0.1 - 5% flavours and colours and 7-30% water.

In another aspect, the invention provides a prepared commercial canned, trayed, pouched or similarly packaged pet food that includes a proteinaceous meat analogue that consists of particles of texturised, proteinaceous extrudate material dispersed in a matrix composed of ground meat-based and cereal-based materials.

In a further aspect, the invention provides a method of manufacturing a proteinaceous meat analogue, consisting of particles of texturised, proteinaceous extrudate material dispersed in a matrix composed of ground meat-based and cereal-based materials, including the steps of:
preparing a paste including comminuted meat material, cereal and binder materials;
blending this paste with particles of texturised, proteinaceous extrudate material;
thermally processing this blend of materials to cause the paste to set, thereby encapsulating the extrudate material; and
cutting the thermally set analogue material to desired size and shape for inclusion in pet food products.

In a step alternative to or in partial replacement thereof, the paste may be set using other than purely thermal processing. Binding of the paste ingredients may be effected using suitable gels and starches. Starches may be used which require lower temperature ranges as would be present utilising thermal setting techniques alone.

It will be apparent to those familiar with the art that the process described above may be embodied either as a batch or continuous process.

The nature of the invention will be further explained using a specific, nonlimiting example of a meat analogue material displaying a good resemblance to a slice of muscle meat according to the invention.

### BRIEF DESCRIPTION OF THE FIGURE

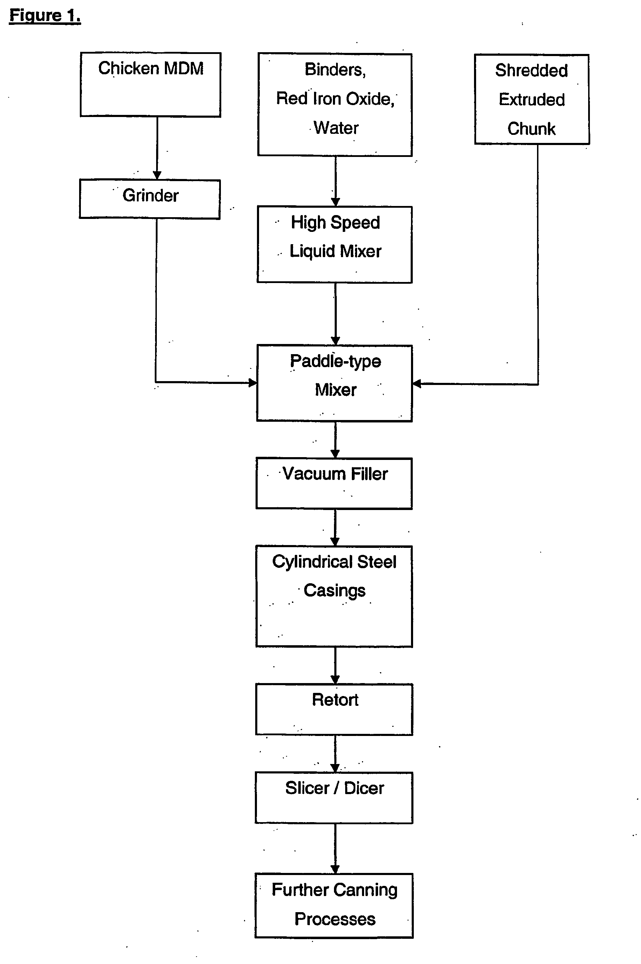

Figure 1 is a schematic flow diagram of a process for preparing a proteinaceous meat analogue according to the invention.

### DETAILED DESCRIPTION OF A PREFERRED EMBODIMENT

A beef steak analogue product according to the invention was prepared. The overall formulation of the product is given in Table 1.

**Table 1.**

| **Ingredient** | **mass %** |
|---|---|
| Fibrous Proteinaceous Extruded Chunk | 40 |
| Mechanically De-boned Chicken Meat (MDM) | Approx. 50 |
| Binders | 3 |
| Water | 7 |
| Red Iron Oxide | 0.02 |

The fibrous extruded material was obtained as per the formulation and process described in WO 00/69276. For the present application, it was shredded to an approximate size corresponding to the ranges: height range from 0.5-10mm, width range from 5-30mm, length range from 20-80mm.

The analogue was prepared according to the process flow shown in Figure 1. Firstly the water, binders and red iron oxide are mixed in a high speed liquid mixer. The binders serve to hold the structure of the analogue together while the red iron oxide provides authentic colour to the analogue. The chicken MDM was ground in a Weiler-type meat grinder having hole plate sizes in the range 2-10 mm.

Then the mixed liquid, the ground meats and the extruded material are transferred to a horizontal paddle blender and mixed until relatively homogeneous.

This mixture is then filled into steel tubes, preferably having an internal diameter of about 50 mm. It will be appreciated by those skilled in the art that any desirable shape and diameter may be used. The filling is accomplished via a vacuum filler of the type commonly used in smallgoods manufacturing. The filled and sealed casings are placed on retort racks and thermally processed in a retort at a temperature of 95°C for approximately 60 minutes. The thermal processing causes the protein matrix present in the mix to denature and thereby bind the extruded chunk. The thermal processing also tends to reduce the likelihood that further material will be expressed by the analogue as it is further thermally processed during the sterilization of the canned products in which it is to be included, causing 'cook-out' cloudiness in the sauce.

After thermal processing, and optional chilled storage, the casing is removed and the 'sausage' of analogue material may be cut to appropriate sizes and shapes for inclusion in canned pet food products. The cut surface of the analogue displays a fibrous 'meaty' appearance desired in premium pet food products, while the outer surface of the 'sausage' displays a relatively undulating texture similar to that displayed by cooked meat such as steak. This surface enhances the authenticity of the analogue appearance, avoiding the artificially smooth appearance of an analogue composed only of comminuted meat. The presence of evenly but randomly distributed chunks of extruded material in the analogue contributes to the controlled but visible unevenness of the analogue surface.

It will be appreciated by those skilled in the art that the above described embodiment is merely one of a multitude of ways in which the invention can be put into practical effect. For example, varied specific compositions of the extruded material, and of the analogue as a whole, may be used.

## Claims

1. A proteinaceous meat analogue, for incorporation into packaged pet foods, wherein said meat analogue consists of particles of intemally texturised, proteinaceous extrudate material dispersed in a gelled matrix composed of ground meat-based and cereal-based materials; wherein the moisture content of said extrudate and said matrix are different; and wherein the internal texturisation of said extrudate has a fibrous structure.

2. The proteinaceous meat analogue of claim 1, wherein said extrudate material is included in the meat and cereal matrix at between 20% and 80% by mass.

3. The proteinaceous meat analogue of claim 2, wherein said extrudate material is included in the meat and cereal matrix at between 35% and 45% by mass.

4. The proteinaceous meat analogue of any preceding claim, wherein said extrudate material has a cross sectional diameter in the range 5mm - 80mm.

5. The proteinaceous meat analogue of any preceding claim, wherein the extrudate material includes about 40 to 95% by weight edible proteinaceous materials of bovine, ovine, porcine, avian or ichthyoid extraction, predetermined mixtures of defatted soy flour, soy meal, soy concentrate, cereal gluten in vital or starch-containing form and egg white; and up to about 7% by weight of edible mineral binding and cross-linking compounds.

6. The proteinaceous meat analogue of claim 5, wherein the extrudate material includes about 40 - 55% by mass defatted soy flour, soy meal or soy concentrate; about 35 - 45% by mass vital wheat gluten, egg white powder, a mixture of vital wheat gluten and maize gluten or a mixture of vital wheat gluten and wheat flour; 0.1 - 7.0% by mass of non-leaching mineral compounds for binding the protein matrix and for enhancing protein cross-linking; optionally-0 - 5% by mass nutritional fibre additives, preferably cellulose or beet pulp; 0.1 - 0.3% by mass vitamins; 0 - 3.0% by mass flavouring agents and 0 - 3.0% by mass colouring agents.

7. The proteinaceous meat analogue of any preceding claim, wherein the composition (by mass) of the analogue is: 35 - 60% high-moisture extruded material; 5-15% ground or diced muscle meat derived from one or more animals selected from the group comprising ovines, bovines and porcines; 8 - 50% ground meat derived from poultry; 8 - 25% ground organs selected from the group comprising liver, heart and lungs, said organs being derived from one or more animals of the group comprising ovines, bovines and porcines; 2-10% binding materials; 1-7% cereal; 0.1 - 5% flavours and colours and 7- 30% water.

8. A prepared commercial canned, trayed, pouched or similarly packaged pet food, said pet food including a proteinaceous meat analogue as defined in any preceding claim.

9. A method of manufacturing a proteinaceous meat analogue, consisting of particles of texturised, proteinaceous extrudate material dispersed in a matrix composed of ground meat-based and cereal-based materials, including the steps of:
preparing a paste including comminuted meat material, cereal and binder materials;
blending said paste with particles of texturised, proteinaceous extrudate material;
processing this blend of materials to cause the paste to set, thereby encapsulating the extrudate material; and
cutting the thermally set analogue material to desired size and shape for inclusion in said pet food products.

10. The method of claim 9, wherein the processing step includes thermal processing.

11. The method of claim 10, wherein the processing step includes filling said blend in solid casings and retorting at 95°C.

12. The method of claim 11, wherein the solid casings have rectangular cross-section of dimensions of about 50mm by 100mm and said casings are heated at 95°C for about 60 minutes.

13. The method of any of claims 9 to 12, wherein said thermally set analogue is cut to dimensions of about 48mm by 22 mm by 5mm.

## Patentansprüche

1. Proteinhaltiger Fleischersatz zur Einarbeitung in abgepackte Haustierfuttermittel, wobei besagter Fleischersatz aus Teilchen aus innen texturiertem, proteinhaltigem Extrudatmaterial besteht, das in einer gelierten Matrix dispergiert ist, die aus Materialien auf der Basis von zerkleinertem Fleisch und Getreide besteht; wobei der Feuchtigkeitsgehalt besagten Extrudates und besagter Matrix verschieden sind; und wobei die innere Texturierung besagten Extrudates eine faserige Struktur aufweist.

2. Proteinhaltiger Fleischersatz nach Anspruch 1, **dadurch gekennzeichnet, daß** besagtes Extrudatmaterial in der Matrix aus Fleisch und Getreide mit zwischen 20% und 80%, massenbezogen, enthalten ist.

3. Proteinhaltiger Fleischersatz nach Anspruch 2, **dadurch gekennzeichnet, daß** besagtes Extrudatmaterial in der Matrix aus Fleisch und Getreide mit zwischen 35% und 45%, massenbezogen, enthalten ist.

4. Proteinhaltiger Fleischersatz nach einem vorangehenden Anspruch, **dadurch gekennzeichnet, daß** besagtes Extrudatmaterial einen Querschnittsdurchmesserim Bereich 5 mm - 80 mm aufweist.

5. Proteinhaltiger Fleischersatz nach einem vorangehenden Anspruch, **dadurch gekennzeichnet, daß** das Extrudatmaterial etwa 40 bis 95 Gew.-% eßbare proteinhaltige Materialien aus Rinder-, Schaf-, Schwein-, Geflügel- oder Fischextraktion, vorbestimmte Mischungen von entfettetem Sojamehl, Sojagrobmehl, Sojakonzentrat, Getreidekleber in vitaler oder stärkehaltiger Form und Eiweiß; und bis zu etwa 7 Gew.-% eßbare mineralische, bindende und vernetzende Mineralverbindungen einschließt.

6. Proteinhaltiger Fleischersatz nach Anspruch 5, **dadurch gekennzeichnet, daß** das Extrudatmaterial etwa 40 bis 55%, massenbezogen, entfettetes Sojamehl, Sojagrobmehl oder Sojakonzentrat; etwa 35-45%, massenbezogen, vitalen Weizenkleber, Eiweißpulver, eine Mischung aus vitalem Weizenkleber und Maiskleber oder eine Mischung aus vitalem Weizenkleber und Weizenmehl; 0,1-7,0%, massenbezogen, nicht-auslaugende Mineralverbindung zum Binden der Proteinmatrix und zur Verstärkung der Proteinvernetzung; fakultativ 0-5%, massenbezogen, Nährstofffaserzusätze, vorzugsweise Cellulose oder ausgelaugte Zuckerrübenschnitzel; 0,1-0,3%, massenbezogen, Vitamine; 0-3,0%, massenbezogen, Geschmacksstoffe und 0-3,0%, massenbezogen, Färbemittel einschließt.

7. Proteinhaltiger Fleischersatz nach einem vorangehenden Anspruch, **dadurch gekennzeichnet, daß** die Zusammensetzung (massenbezogen) des Ersatzstoffes wie folgt ist: 35-60% extrudiertes Material mit hohem Feuchtigkeitsgehalt; 5-15% zerkleinertes oder in Würfeln geschnittenes Muskelfleisch, gewonnen aus einem oder mehreren Tieren, die ausgewählt sind aus der Gruppe, die aus Schafen, Rindern und Schweinen besteht; 8-50% zerkleinertes Fleisch, das aus Geflügel gewonnen ist; 8-25% zerkleinerte Organe, die ausgewählt sind aus der Gruppe, die Leber, Herz und Lunge umfaßt, wobei besagte Organe aus einem oder mehreren Tieren der Gruppe gewonnen sind, die Schafe, Rinder und Schweine umfaßt; 2-10% Bindematerialien; 1-7% Getreide; 0,1-5% Geschmacksstoffe und Färbemittel und 7-30% Wasser.

8. Fertiggestelltes, kommerzielles, in Dosen, Schalen, Pouches oder in ähnlicher Weise abgepacktes Haustierfuttermittel, wobei besagtes Haustierfuttermittel einer proteinhaltigen Fleischersatz einschließt, wie definiert in einem vorangehenden Anspruch.

9. Verfahren zur Herstellung eines proteinhaltigen Fleischersatzes, der Teilchen aus texturiertem, proteinhaltigen Extrudatmaterial enthält, das in einer Matrix dispergiert ist, die aus Materialien auf der Basis von zerkleinertem Fleisch und Getreide besteht, einschließlich der Schritte:
Herstellung einer Paste, die zerkleinertes Fleischmaterial, Getreide und Bindematerialien einschließt;
Vermischen besagter Paste mit Teilchen aus texturiertem, proteinhaltigen Extrudatmaterial;
Verarbeiten dieses Gemisches von Materialien, um zu bewirken, daß die Paste fest wird, wodurch das Extrudatmaterial eingekapselt wird; und
Zerschneiden des thermisch verfestigten Ersatzstoffmaterials in gewünschte Größe und Form zur Einbeziehung in besagte Haustierfuttermittelprodukte.

10. Verfahren nach Anspruch 9, **dadurch gekennzeichnet, daß** der Verarbeitungsschritt thermische Verarbeitung einschließt.

11. Verfahren nach Anspruch 10, **dadurch gekennzeichnet, daß** der Verarbeitungsschritt das Abfüllen besagten Gemisches in feste Behältnisse und Kochen bei 95°C einschließt.

12. Verfahren nach Anspruch 11, **dadurch gekennzeichnet, daß** die festen Behältnisse rechteckigen Querschnitt und Abmessungen von etwa 50 mm auf 100 mm besitzen und besagte Behältnisse bei 95°C für etwa 60 Minuten erhitzt werden.

13. Verfahren nach einem der Ansprüche 9 bis 12, **dadurch gekennzeichnet, daß** besagter thermisch verfestigte Ersatzstoff in Abmessungen von etwa 48 mm auf 22 mm auf 5 mm geschnitten wird.

## Revendications

1. Analogue de viande protéique destiné à une incorporation dans des aliments pour animaux de compagnie emballés, dans lequel ledit analogue de viande se compose de particules de matière d'extrudat protéique texturée à l'intérieur, dispersées dans une matrice gélifiée composée de matières broyées à base de viande et à base de céréales; dans lequel la teneur en eau dudit extrudat et celle de ladite matrice sont différentes; et dans lequel la texturisation interne dudit extrudat a une structure fibreuse.

2. Analogue de viande protéique selon la revendication 1, dans lequel ladite matière d'extrudat est présente dans la matrice de viande et de céréales en une quantité comprise entre 20% et 80% en masse.

3. Analogue de viande protéique selon la revendication 2, dans lequel ladite matière d'extrudat est présente dans la matrice de viande et de céréales en une quantité comprise entre 35% et 45% en masse.

4. Analogue de viande protéique selon l'une quelconque des revendications précédentes, dans lequel ladite matière d'extrudat a un diamètre de section dans la gamme de 5 mm à 80 mm.

5. Analogue de viande protéique selon l'une quelconque des revendications précédentes, dans lequel la matière d'extrudat comprend environ 40% à 95% en poids de matières protéiques comestibles d'origine bovine, ovine, porcine, aviaire ou ichtyologique, des mélanges prédéterminés de farine de soja dégraissée, de farine de soja, de concentré de soja, de gluten de céréales sous une forme vitale ou contenant de l'amidon et du blanc d'oeuf; et jusqu'à environ 7% en poids de composés de réticulation et de liants minéraux comestibles.

6. Analogue de viande protéique selon la revendication 5, dans lequel la matière d'extrudat comprend environ 40% à 55% en masse de farine de soja dégraissée, de farine de soja ou de concentré de soja ; environ 35% à 45% en masse de gluten de blé vital, de poudre de blanc d'oeuf, un mélange de gluten de blé vital et de gluten de maïs ou un mélange de gluten de blé vital et de farine de blé ; 0, 1 % à 7,0% en masse de composés minéraux non lessivables pour lier la matrice de protéines et pour améliorer la réticulation des protéines ; éventuellement 0% à 5% en masse d'additifs de fibres nutritionnelles, de préférence la cellulose ou la pulpe de betterave ; 0,1% à 0,3% en masse de vitamines ; 0% à 3,0% en masse d'agents aromatisants et 0% à 3,0% en masse d'agents colorants.

7. Analogue de viande protéique selon l'une quelconque des revendications précédentes, dans lequel la composition (en masse) de l'analogue est : 35% à 60% de matière extrudée à forte teneur en eau ; 5% à 15% de viande musculaire broyée ou en dés dérivée d'un ou plusieurs animaux choisis dans le groupe comprenant les ovins, les bovins et les porcins ; 8% à 50% de viande broyée dérivée de volailles ; 8% à 25% d'organes broyés choisis dans le groupe comprenant le foie, le coeur et les poumons, lesdits organes étant dérivés d'un ou plusieurs animaux du groupe comprenant les ovins, les bovins et les porcins ; 2% à 10% de liants ; 1% à 7% de céréales ; 0,1% à 5% d'arômes et de colorants et 7% à 30% d'eau.

8. Aliments pour animaux de compagnie en conserve, en barquette, en sachet ou emballé de manière similaire préparés à l'échelle industrielle, lesdits aliments pour animaux de compagnie comprenant un analogue de viande protéique tel que défini dans l'une quelconque des revendications précédentes.

9. Procédé de fabrication d'un analogue de viande protéique, composé de particules de matière d'extrudat protéique texturée, dispersées dans une matrice composée de matières broyées à base de viande et à base de céréales, comprenant les étapes consistant à :
- préparer une pâte comprenant de la matière de viande broyée, des céréales et des liants ;
- mélanger ladite pâte avec des particules de matière d'extrudat protéique texturée ;
- traiter ce mélange de matières pour entraîner le durcissement de la pâte, encapsulant ainsi la matière d'extrudat ; et
- découper la matière d'analogue durcie thermiquement à une taille et une forme souhaitées pour une incorporation dans lesdits produits d'aliments pour animaux de compagnie.

10. Procédé selon la revendication 9, dans lequel l'étape de traitement comprend un traitement thermique.

11. Procédé selon la revendication 10, dans lequel l'étape de traitement comprend le remplissage de boîtiers solides avec ledit mélange et un passage à l'autoclave à 95°C.

12. Procédé selon la revendication 11, dans lequel les boîtiers solides ont une section rectangulaire de dimensions d'environ 50 mm par 100 mm et lesdits boîtiers sont chauffés à 95°C pendant environ 60 minutes.

13. Procédé selon l'une quelconque des revendications 9 à 12, dans lequel ledit analogue durci thermiquement est découpé à des dimensions d'environ 48 mm par 22 mm par 5 mm.
